# EUROPÄISCHE PATENTANMELDUNG

(11) **EP 1 684 487 A2**
(43) Veröffentlichungstag der Anmeldung: **26.07.2006**
(21) Anmeldenummer: 06001241.6
(22) Anmeldetag: 20.01.2006
(51) Int. Cl.: H04L 29/06

(54) **Verfahren zur Auswahl von Hardware zum Betrieb einer Anwendung auf einem Kommunikationsendgerät und Netzwerk-Anordnung dafür**

(30) Priorität: 20.01.2005 DE 102005002766
(71) Anmelder: BenQ Corporation, Gueishan Taoyuan 333 (TW); BenQ Mobile GmbH & Co. oHG, 81667 München (DE)
(72) Erfinder: Koora, Kalyan, 46395 Bocholt (DE); Gröting, Wolfgang, 46149 Oberhausen (DE); Rösen, Benedikt, 46459 Rees (DE); Seraji, Gholam Ali, 46397 Bocholt (DE)
(74) Vertreter: Epping - Hermann - Fischer

(57) **Zusammenfassung**

Die Erfindung betrifft ein Verfahren zur Auswahl von Hardware zum Betrieb einer Anwendung auf einem Kommunikationsendgerät (KE) mit den Schritten:
a) Senden eines ersten Informationselementes (IE1), das Angaben über die zu startende Anwendung und das erste und das zweite Hardware-Element enthält, von dem Kommunikationsendgerät (KE) zu einem Kernnetzwerks (NW), bei dem das Kommunikationsendgerät (KE) angemeldet ist,
b) Leiten des ersten Informationselementes (IE1) zu einer Anwendungs-Unterstützungseinrichtung (ASU),
c) Berechnen, welches von dem ersten und dem zweiten Hardware-Element zur Ausführung der Anwendung bevorzugt ist, durch die Anwendungs-Unterstützungseinrichtung (ASU) aufgrund vorgegebener Randbedingungen für die Berechnung,
d) Senden eines zweiten Informationselementes (IE2), das eine Angabe des bevorzugten Hardware-Elementes enthält, von der Anwendungs-Unterstützungseinrichtung (ASU) zu dem Kernnetzwerk (NW),
e) Starten der Anwendung auf dem Kommunikationsendgerät (KE), basierend auf dem zweiten Informationselement (IE2).

Vorgestellt wird außerdem eine zur Durchführung des Verfahrens ausgeführte Netzwerk-Anordnung.

## Beschreibung

Die Erfindung bezieht sich auf ein Verfahren zur Auswahl von Hardware zum Betrieb einer Anwendung auf einem Kommunikationsendgerät, wobei ein Betrieb der Anwendung die Nutzung wenigstens eines Hardware-Elementes des Kommunikationsendgerätes erfordert und das Kommunikationsendgerät wenigstens ein zweites, zu dem ersten Hardware-Element funktionell alternatives Hardware-Element aufweist.

Ein typisches Beispiel für ein solches Hardware-Element ist eine Funkschnittstelle eines Mobiltelefons als Beispiel für ein mobiles Kommunikationsendgerät. Viele Mobiltelefone sind mittlerweile mit mehreren Funkschnittstellen ausgestattet, so dass eine Nutzung eines gewünschten Dienstes, der von einer Netzwerkseite aus angeboten wird, grundsätzlich über mehrere Schnittstellen erfolgen kann. So können beispielsweise Daten aus dem Internet sowohl über GPRS als auch über WLAN, aber auch zusätzlich über eine kabelgebundene LAN-Schnittstelle auf ein Kommunikationsendgerät herunter geladen werden. Hier ergibt sich die Problematik, dass eine der Schnittstellen auszuwählen ist, mit der die betreffende Anwendung ausgeführt werden soll.

Die betreffende Hardwareauswahl erfolgt bisher durch einen Benutzer des Kommunikationsendgerätes selbst, wobei er die Hardware nach persönlichen Kriterien aussucht, wie Datengeschwindigkeit, Nutzungskosten u. ä. Dabei ergibt es sich, dass teilweise recht umfangreiche Berechnungen durch den Benutzer anzustellen sind um herauszufinden, welche Hardware seinen persönlichen Präferenzen am meisten entspricht und gleichzeitig für einen Betrieb einer gewünschten Anwendung innerhalb einer vorgegebenen Netzwerkumgebung geeignet ist.

Alternativ ist es auch möglich, dass das Kommunikationsendgerät selbst Berechnungen anstellt, welche Hardware für welche gewünschte Anwendung zu benutzen ist. Eine solche automatische Auswahl der für eine Anwendung benutzten Hardware eines Kommunikationsendgerätes bindet jedoch Rechenleistung desselben, was als nachteilig angesehen wird. Umfangreiche Berechnungen schlagen sich unmittelbar in einem erhöhten Energieverbrauch nieder, was gerade bei Mobiltelefonen oder anderen mobilen Kommunikationsendgeräten nicht wünschenswert ist.

Ausgehend hiervon liegt der Erfindung die Aufgabe zugrunde, ein Verfahren zur Auswahl von Hardware zum Betrieb einer Anwendung auf einem Kommunikationsendgerät sowie eine dafür geeignete Netzwerk-Anordnung anzugeben, bei denen geringer Rechenaufwand für das Kommunikationsendgerät entsteht.

Diese Aufgabe wird hinsichtlich des Verfahrens durch die Merkmale des Patentanspruchs 1 gelöst.

Danach ist ein Verfahren zur Auswahl von Hardware zum Betrieb einer Anwendung auf einem Kommunikationsendgerät vorgesehen,
wobei ein Betrieb der Anwendung die Nutzung wenigstens eines ersten Hardware-Elementes des Kommunikationsendgerätes erfordert und das Kommunikationsendgerät wenigstens ein zweites, zu dem ersten Hardware-Element funktionell alternatives Hardware-Element aufweist, mit den Schritten:
a) Senden eines ersten Informationselementes, das Angaben über die zu startende Anwendung und das erste und das zweite Hardware-Element enthält, von dem Kommunikationsendgerät zu einem Kernnetzwerk, bei dem das Kommunikationsendgerät angemeldet ist,
b) Leiten des ersten Informationselementes zu einer Anwendungs-Unterstützungseinrichtung,
c) Berechnen, welches von dem ersten und dem zweiten Hardware-Element zur Ausführung der Anwendung bevorzugt ist, durch die Anwendungs-Unterstützungseinrichtung aufgrund vorgegebener Randbedingungen für die Berechnung,
d) Senden eines zweiten Informationselementes, das eine Angabe des bevorzugten Hardware-Elementes enthält, von der Anwendungs-Unterstützungseinrichtung zu dem Kernnetzwerk,
e) Senden eines dritten Informationselementes, das auf dem zweiten Informationselement von der Anwendungs-Unterstützungseinrichtung basiert, von dem Kernnetzwerk zu dem Kommunikationsendgerät und
f) Starten der Anwendung auf dem Kommunikationsendgerät, basierend auf dem von dem Kernnetzwerk erhaltenen dritten Informationselement.

Der Begriff "Hardware-Element" wird in der vorliegenden Beschreibung in sehr breitem Sinne gebraucht, nämlich für beispielsweise Schnittstellen, Speicher, aber auch Hardwareeigenschaften, wie die Unterstützung eines Mobilfunkstandards oder eine Übertragungsrate, welche grundsätzlich an ein bestimmtes Hardware-Element gekoppelt sind. Als Alternative zu dem Begriff "Hardware-Element" könnte auch der Begriff "Ressource" benutzt werden.

Von besonderer Bedeutung für das Verfahren sind diejenigen Verfahrensschritte, die es gestatten, dass die Berechnung, aufgrund der eine Auswahl des für die Anwendung zu nutzenden Hardware-Elementes getroffen wird, extern von dem Kommunikationsendgerät erfolgt, nämlich innerhalb der Anwendungs-Unterstützungseinrichtung. Diese kann Teil des Kernnetzwerks sein, an dem das Kommunikationsendgerät angemeldet ist. Ebenso ist es möglich, dass die Anwendungs-Unterstützungseinrichtung über ein Gateway mit dem Kernnetzwerk in Verbindung steht.

Aufgrund der Vorgehensweise der externen Berechnung eines Vorschlags für das zu verwendende Hardware-Element zum Betrieb der Anwendung wird auf Seiten des Kommunikationsendgerätes Rechenleistung eingespart und der Benutzer des Kommunikationsendgerätes muss kaum mehr eingreifen, um eine gewünschte Anwendung zu starten. Seine Einflussnahme kann darauf beschränkt sein, dass er die vorgegebenen Randbedingungen auf Seiten der Anwendungs-Unterstützungseinrichtung vorgibt. Solche Randbedingungen können sich auf die von der Anwendung benötigten Hardware-Elemente selbst aber auch auf netzbezogene Eigenschaften, wie Nutzungsentgelte, beziehen.

Bevorzugt sind das erste und das zweite Hardware-Element aus der Gruppe ausgewählt, die Schnittstellen, Speicher und Prozessoren des Kommunikationsendgerätes enthält. Diese Arten von Hardware-Elementen werden besonders häufig von Anwendungen genutzt, die auf Kommunikationsendgeräten ausgeführt werden. Anwendungen, deren Funktionalität es gestattet, Daten aus beispielsweise dem Internet herunter zu laden, sind auf die Nutzung von Schnittstellen angewiesen. Gleichzeitig wird auch ein Speicher benötigt, um herunter geladene Daten abzulegen. Die Verwendung eines Prozessors zum Ablauf einer Anwendung in einem Kommunikationsendgerät versteht sich von selbst. Nach der Erfindung kann mit Hilfe der Anwendungs-Unterstützungseinrichtung unter den jeweils auf Seiten des Kommunikationsendgerätes vorliegenden Hardware-Elementen derselben Art eine Auswahl getroffen werden, die mit Hilfe des zweiten Informationselementes von der Anwendungs-Unterstützungseinrichtung ausgegeben werden.

Vorzugsweise enthält das erste Informationselement Angaben über weitere Hardware-Elemente des Kommunikationsendgerätes. Solche Angaben können von der Anwendungs-Unterstützungseinrichtung ausgewertet werden und in eine Berechnung für einen Vorschlag für das zu benutzende Hardware-Element einbezogen werden. Wenn beispielsweise eine vorgesehene Anzeigeeinrichtung des Kommunikationsendgerätes eine eher geringe Auflösung zeigt, kann diese Angabe in die Auswahl einer Schnittstelle zum Betrieb der Anwendung eingehen.

Es kann vorgesehen sein, dass das von der Anwendungs-Unterstützungseinrichtung kommende zweite Informationselement von dem Kernnetzwerk überprüft wird, bei dem das Kommunikationsendgerät angemeldet ist. Die Überprüfung findet dann dahingehend statt, ob Angaben in dem zweiten Informationselement zu einer Umgebung des Kernnetzwerkes passen, wobei das Kernnetzwerk bei Bedarf Angaben in dem zweiten Informationselement von der Anwendungs-Unterstützungseinrichtung ändert, wenn in Schritt e) das dritte Informationselement für das Kommunikationsendgerät erzeugt wird. Diese Ausführungsform betrifft den Fall, dass bei der Anwendungs-Unterstützungseinrichtung möglicher Weise bestimmte, wesentliche Angaben, welche Eigenschaften des Kernnetzwerkes betreffen, zur Berechnung des Vorschlags für ein zu nutzendes Hardware-Element fehlen, so dass diese Angaben in dem zweiten Informationselement nicht berücksichtigt werden können. In solchen Fällen kann das Kernnetzwerk zum Erzeugen des dritten Informationselementes das zweite Informationselement modifizieren, so dass beispielsweise statt der zunächst von der Anwendungs-Unterstützungseinrichtung vorgeschlagenen Schnittstelle eine andere Schnittstelle dem Kommunikationsendgerät empfohlen wird. Von Seiten des Kernnetzwerks können beispielsweise Informationen bereitgestellt werden, die der Anwendungs-Unterstützungsvorrichtung selbst nicht vorliegen oder sehr zeitdynamisch sind. Solche Informationen können sich auf einen Preis pro Kommunikationsverbindung, einen Preis pro Nutzung eines Dienstes, jeglicher Art von Quality-Of-Service-Parametern, aber auch auf ein sog. "Load-Balancing", eine von dem Kernnetzwerk zur Verfügung gestellte Bandbreite und eine Verbindungsqualität (SNR) zwischen dem Kommunikationsendgerät und dem Kernnetzwerk beziehen.

Bei einer bevorzugten Ausführungsform des Verfahrens kann vorgesehen sein, dass das von der Anwendungs-Unterstützungseinrichtung kommende zweite Informationselement nicht nur einen einzelnen Vorschlag für ein zu verwendendes Hardware-Element umfasst, sondern eine Prioritätsliste für das erste und das zweite Hardware-Element enthält. Selbstverständlich kann das zweite Informationselement auch mehreren Prioritätslisten für eine jeweilige Art von Hardware-Element, beispielsweise Schnittstelle und Prozessor, enthalten. Ebenso kann bei einem vereinfachten Verfahren für eine Anwendung, die beispielsweise eine externe Schnittstelle, einen Speicher und einen Prozessor benötigt, jeweils eine einzige Auswahl für das zu verwendende Hardware-Element der gewünschten Art getroffen werden.

Es ist vorteilhaft, wenn die vorgegebenen Randbedingungen für die Anwendungs-Unterstützungseinrichtung von einem Benutzer des Kommunikationsendgerätes wenigstens teilweise festgelegt werden. Auf diese Weise wird es dem Benutzer ermöglicht, eigene Präferenzen in den Berechnungsvorgang, der auf der Anwendungs-Unterstützungseinrichtung stattfindet, zum Vorschlagen eines bestimmten Hardware-Elementes einzubringen.

Die Randbedingungen können für das erste und das zweite Hardware-Element spezifisch sein, was bedeutet, dass in dem Fall, wenn eine Auswahl unter mehreren, bei dem Kommunikationsendgerät vorgesehenen Schnittstellen zu treffen ist, für jede Schnittstelle als Randbedingung z. B. ihre Übertragungsrate hinterlegt wird. Ähnliche Randbedingungen lassen sich auch für einen Speicher oder einen Prozessor finden und auf der Anwendungs-Unterstützungseinrichtung hinterlegen. Im Einzelnen können das erste und das zweite Hardware-Element jeweils Schnittstellen des Kommunikationsendgerätes sein, wobei die Randbedingungen sich auf Entgelte für eine Nutzung der Schnittstellen beziehen. Als Schnittstellen kommen insbesondere in Frage: UMTS, LAN, IEEE1394, SigBee, Bluetooth, Infrarot, UWB sowie im Bereich der Nahfeldkommunikation die Standards 802.3, 802.11x, 8002.15x, 802.16x und 802.20.

Es kann vorgesehen sein, dass in Schritt f) vor einem Starten der Anwendung das dritte Informationselement einem Benutzer des Kommunikationsendgerätes zur Prüfung angezeigt und entweder bestätigt oder modifiziert wird. Auf diese Weise erhält der Benutzer die Möglichkeit, so zu sagen als letzte Instanz den Vorschlag von der Anwendungs-Unterstützungseinrichtung, ggf. modifiziert durch ein geeignetes Element des Kernnetzwerkes, zu bestätigen oder aber abzuändern.

Im Fall einer Bestätigung des dritten Informationselementes durch den Benutzer des Kommunikationsendgerätes kann eine Bestätigungsmeldung an die Anwendungs-Unterstützungseinrichtung gesendet werden, woraufhin von der Anwendungs-Unterstützungseinrichtung ein Code an das Kommunikationsendgerät gesendet wird, der zum Konfigurieren des Kommunikationsendgerätes entsprechend dem Inhalt des zweiten Informationselementes ausgeführt ist. Dies betrifft den Fall, dass auf Seiten des Kernnetzwerkes keine Modifikation des zweiten Informationselementes vorgenommen worden sind. Ebenso wenig hat der Benutzer zu erkennen gegeben, dass er den Vorschlag der Anwendungs-Unterstützungseinrichtung für ein günstiger Weise zu nutzendes Hardware-Element nicht annehmen will. In solchen Fällen sorgt der Code von der Anwendungs-Unterstützungseinrichtung durch seine geeignete Weiterverarbeitung auf dem Kommunikationsendgerät dafür, dass eine Konfiguration desselben entsprechend dem Vorschlag von der Anwendungs-Unterstützungseinrichtung vorgenommen wird.

Die oben genannte Aufgabe wird vorrichtungsmäßig gelöst durch eine Netzwerk-Anordnung zur Auswahl von Hardware zum Betrieb einer Anwendung auf einem Kommunikationsendgerät,
wobei ein Betrieb der Anwendung die Nutzung wenigstens eines ersten Hardware-Elementes des Kommunikationsendgerätes erfordert und das Kommunikationsendgerät wenigstens ein zweites, zu dem ersten Hardware-Element funktionell alternatives Hardware-Element aufweist, die Netzwerk-Anordnung außerdem ein Kernnetzwerk aufweist, an dem das Kommunikationsendgerät angemeldet ist,
dadurch gekennzeichnet, dass
die Netzwerk-Anordnung eine Anwendungs-Unterstützungseinrichtung aufweist, die zum Empfangen eines ersten Informationselementes, das Angaben über eine zu startende Anwendung auf dem Kommunikationsendgerät und über ein erstes Hardware-Element, das zum Betrieb der Anwendung erforderlich ist, und ein zweites, zu dem ersten Hardware-Element funktionell alternatives Hardware-Element enthält, ausgebildet ist,
die Anwendungs-Unterstützungseinrichtung eine Berechnungseinrichtung aufweist, die aufgrund des ersten Informationselementes berechnet, welches von dem ersten und dem zweiten Hardware-Element zur Ausführung der Anwendung bevorzugt ist, und
die Anwendungs-Unterstützungseinrichtung zum Erzeugen eines zweiten Informationselementes ausgebildet ist, das eine Angabe des bevorzugten Hardware-Elementes enthält.

Eine solche Netzwerk-Anordnung gestattet es, das oben beschriebene Verfahren auszuführen. Dabei kann die Anwendungs-Unterstützungseinrichtung in das Kernnetzwerk, bei dem das Kommunikationsendgerät angemeldet ist, integriert sein oder, beispielsweise über einen Gateway, mit dem Kernnetzwerk in Verbindung stehen. Von Bedeutung ist lediglich, dass in irgendeiner Weise eine Kommunikationsverbindung zwischen dem Kommunikationsendgerät und der Anwendungs-Unterstützungseinrichtung herstellbar ist.

Einzelne Komponenten der Netzwerk-Anordnung lassen sich in der Art weiterentwickeln, dass auch die bevorzugten Ausführungsformen des Verfahrens durchführbar werden.

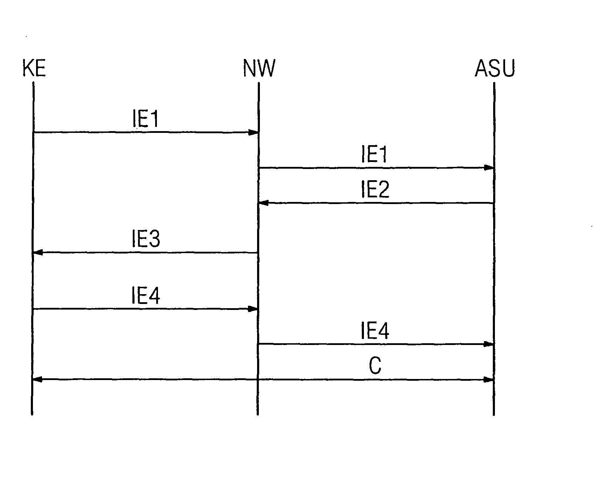

Die Erfindung wird nachfolgend anhand eines Ausführungsbeispiels noch näher erläutert, wobei auf eine Zeichnung Bezug genommen wird. Die einzige Zeichnungsfigur zeigt eine schematische Darstellung einer Netzwerkanordnung zur Durchführung eines Verfahrens zur Auswahl von Hardware-Elementen zum Betrieb einer Anwendung auf einem Kommunikationsendgerät, das Teil der Netzwerk-Anordnung ist.

Die in der Figur dargestellte Netzwerk-Anordnung umfasst als Hauptkomponenten ein mobiles Kommunikationsendgerät KE, ein Kernnetzwerk NW, an dem das mobile Kommunikationsendgerät angemeldet ist, und eine Anwendungs-Unterstützungseinrichtung ASU, welche eine Auswahl eines Hardware-Elementes zum Betrieb einer Anwendung auf dem mobilen Kommunikationsendgerät KE unterstützt.

Das mobile Kommunikationsendgerät KE steht über eine Luftschnittstelle mit dem Kernnetzwerk NW in Verbindung, und zwar bei der hier gewählten Ausführungsform einer Mobilfunkverbindung z. B. über eine zugehörige Basisstation bei einem zellularen Mobilfunksystem oder über einen Hotspot bei einem WLAN-Netzwerk.

Auf dem mobilen Kommunikationsendgerät KE soll eine Anwendung gestartet werden, die für ihre Ausführung auf Schnittstellen eines Typs A, der sich durch bestimmte Schnittstelleneigenschaften auszeichnet, und Prozessor-Ressourcen eines Typs B zugreifen muss. Das mobile Kommunikationsendgerät verfügt über Schnittstellen X, Y, Z, von denen die Schnittstellen X und Z von dem Typ A sind. Außerdem ist das mobile Kommunikationsendgerät KE mit drei Prozessoren U, V, W ausgestattet, von denen sämtliche von dem Typ B sind. Das mobile Kommunikationsendgerät KE generiert ein erstes Informationselement IE1, welches die Informationen enthält, welche Anwendung zu starten ist, welche Schnittstellen bei dem Kommunikationsendgerät KE verfügbar sind und mit welchen Prozessoren das Kommunikationsendgerät KE ausgestattet ist. Außerdem enthält das erste Informationselement IE1 Angaben über weitere Hardware-Elemente des Kommunikationsendgerätes, wie beispielsweise die Auflösung einer Anzeige-Einrichtung. Allgemein kann ein Leistungsvermögen weiterer Hardware-Elemente dafür ausschlaggebend sein, welches Hardware-Element aus mehreren Alternativen für den Betrieb der Anwendung am günstigsten ist. Dieses erste Informationselement IE1 wird von dem mobilen Kommunikationsendgerät KE aus zu dem Kernnetzwerk NW geleitet, das eine Weiterleitung des ersten Informationselementes IE1 zu der Anwendungs-Unterstützungseinrichtung ASU bewirkt.

Auf Seiten der Anwendungs-Unterstützungseinrichtung ASU, die entweder Teil des Kernnetzwerks NW oder mit letzterem über ein Gateway verbunden sein kann, liegen für eine Vielzahl von Anwendungen Informationen darüber vor, welche Schnittstellen bzw. Prozessoren usw. für ihren Betrieb geeignet sind. Des weiteren liegen bei der Anwendungs-Unterstützungseinrichtung ASU auf einen Benutzer des mobilen Kommunikationsendgerätes KE zurückgehende Informationen über persönliche Auswahlkriterien für eine zu benutzende Schnittselle oder einen zu benutzenden Prozessor vor. Auswahlkriterien für eine zu benutzende Schnittstelle können sein: damit verbundene Nutzungskosten, Preis pro Verbindung, Preis pro Dienst, jegliche Art von Quality-Of-Service-Parametern, "Load-Balancing" und EMV-Parameter, gewünschter Nutzungszeitraum. In die Auswahl der zu benutzenden Schnittstelle kann außerdem eine gewünschte Qualität der Anwendung eingehen, was gerade bei Multimedia-Anwendungen besonders wichtig ist, eine Art des abgeschlossenen Vertrages mit dem Netzbetreiber, d. h. das Vorliegen einer Flatrate oder eines Volumentarifs, sowie eine jeweils maximale Datenrate der zur Verfügung stehenden Schnittstellen. Für eine Auswahl eines von mehreren Prozessoren sind als Kriterien denkbar: Rechenleistung, zur Verfügung stehender Speicher, vorliegende Batterieleistung und Art einer Anzeige-Einrichtung im Hinblick auf Schwarz-Weiß-Darstellung oder Farb-Darstellung unter Einbeziehung einer Pixelanzahl.

Die Anwendungs-Unterstützungseinrichtung ASU wertet das von dem Kernnetzwerk NW empfangene erste Informationselement IE1 aus und berechnet aufgrund der Auswahlkriterien jeweils Prioritätslisten sowohl für den Prozessor als auch für die Schnittstelle. Im vorliegenden Ausführungsbeispiel lautet die Prioritätsliste für die Prozessoren: V, W, U, während die Schnittstellen prioritätsmäßig wie folgt geordnet sind: X, Z.

Dabei wird auf Seiten der Anwendungs-Unterstützungseinrichtung ASU zuvor die Feststellung getroffen, dass die Schnittstelle Y zur Ausführung der gewünschten Anwendung, die in dem ersten Informationselement IE1 mitgeteilt wird, ungeeignet ist.

Daraufhin, d. h. nach Abschluss der Berechnungen für die Prioritätslisten, generiert die Anwendungs-Unterstützungseinrichtung ASU ein zweites Informationselement IE2, welches die Prioritätslisten für die Schnittstellen und die Prozessoren enthält. Dieses zweite Informationselement IE2 wird von der Anwendungs-Unterstützungseinrichtung ASU zu dem Kernnetzwerk NW geschickt. Das Kernnetzwerk NW, genauer gesagt eine darin enthaltene Prüfungseinrichtung, die in Software realisiert sein kann, nimmt eine Überprüfung der Inhalte des zweiten Informationselementes IE2 dahingehend vor, ob die Prioritätslisten aufgrund besonderer Netzwerkanforderungen, wie der Vertrag, der zwischen einem Nutzer des Kommunikationsendgerätes mit dem Netzwerkbetreiber abgeschlossen ist ("Gold-", "Silver-", ...Vertrag), Leistungsvermögen des Kernnetzwerks zur Unterstützung einer gewünschten Qualität des Dienstes im Hinblick auf eine Netzbelastung, -Kapazität, sowie Autorisierungsinformationen über den Nutzer des Kommunikationsendgerätes, betreffend die zu startende Anwendung, möglicher Weise zu modifizieren ist. Im vorliegenden Ausführungsbeispiel wird festgestellt, dass aufgrund bestimmter Netzwerkanforderungen der Prozessor V für einen Betrieb der Anwendung in dem Kernnetzwerk NW ungeeignet ist. Gleiches gilt auch für die Schnittstelle Z. Daraufhin erzeugt die Prüfungseinrichtung des Kernnerzwerks NW ein drittes Informationselement IE3, das nunmehr als Prioritätsliste für die Prozessoren folgendes enthält: V, U. Hinsichtlich der Schnittstellen ist ausschließlich die Schnittstelle X zum Betrieb der Anwendung geeignet, wenn sowohl die Kriterien, die bei der Anwendungs-Unterstützungseinrichtung ASU vorliegen, als auch die Kriterien, die Netzwerkanforderungen betreffen, berücksichtigt werden. Das dritte Informationselement IE3 wird von dem Kernnetzwerk NW zu dem mobilen Kommunikationsendgerät KE gesendet.

Es ist hervorzuheben, dass bei Nichtvorliegen besonderer Netzwerkanforderungen oder deren Einhaltung durch die Inhalte des zweiten Informationselementes IE2 eine Modifizierung durch die Prüfungseinrichtung des Kernnetzwerkes NW nicht erforderlich ist, so dass das zweite Informationselement IE2 ungeändert an das mobile Kommunikationsendgerät KE von dem Kernnetzwerk NW weitergeleitet wird.

Der Inhalt des dritten Informationselementes IE3 kann durch den Benutzer geprüft werden. Zu diesem Zweck wird auf dem Kommunikationsendgerät KE dargestellt, welche Vorschläge bzw. Prioritätslisten von der Anwendungs-Unterstützungseinrichtung ASU, ggf. modifiziert durch das Kernnetzwerk NW, berechnet worden sind. Der Benutzer hat dann die Option, die Vorschläge zu akzeptieren, so dass von dem mobilen Kommunikationsendgerät KE eine Bestätigungsmeldung IE4 zu der Anwendungs-Unterstützungseinrichtung ASU gesendet wird. Daraufhin wird unter Einhaltung eines geeigneten Protokolls ein Binärcode C von der Anwendungs-Unterstützungseinrichtung herunter geladen, der von dem mobilen Kommunikationsendgerät KE so verarbeitet werden kann, dass zum Betrieb der Anwendung die Schnittstelle X und der Prozessor V festgelegt werden.

Wenn der Benutzer die in dem dritten Informationselement IE3 enthaltenen und berechneten Vorschläge nicht akzeptiert, kann er einen Berechnungsvorschlag von der Anwendungs-Unterstützungseinrichtung anfordern oder auch selbst beispielsweise einen anderen Prozessor, nämlich den Prozessor U, vorschlagen, wonach die Anwendungs-Unterstützungseinrichtung ASU den zugehörigen Binärcode für die entstehende Kombination aus gewünschter Schnittstelle X und gewünschtem Prozessor U an das mobile Kommunikationsendgerät KE sendet.

Zur Verarbeitung des Binärcodes C ist das Kommunikationsendgerät KE mit geeigneter Konfigurationssoftware ausgestattet.

Es ist hervorzuheben, dass das dargestellte Ausführungsbeispiel sich allein aus Gründen der Übersichtlichkeit auf die Diskussion von Schnittstellen und Prozessoren beschränkt. Selbstverständlich kann die Anwendungs-Unterstützungseinrichtung ASU weitere Prioritätslisten oder Vorschläge für einzelne Hardware-Elemente, wie einen Speicher des mobilen Kommunikationsendgerätes KE, berechnen. Dies geschieht analog zu den Vorgehensweisen, die im Zusammenhang mit der Auswahl einer Schnittstelle und eines Prozessors beschrieben worden sind.

## Patentansprüche

1. Verfahren zur Auswahl von Hardware zum Betrieb einer Anwendung auf einem Kommunikationsendgerät (KE), wobei ein Betrieb der Anwendung die Nutzung wenigstens eines ersten Hardware-Elementes des Kommunikationsendgerätes (KE) erfordert und das Kommunikationsendgerät (KE) wenigstens ein zweites, zu dem ersten Hardware-Element funktionell alternatives Hardware-Element aufweist, mit den Schritten:
a) Senden eines ersten Informationselementes (IE1), das Angaben über die zu startende Anwendung und das erste und das zweite Hardware-Element enthält, von dem Kommunikationsendgerät (KE) zu einem Kernnetzwerks (NW), bei dem das Kommunikationsendgerät (KE) angemeldet ist,
b) Leiten des ersten Informationselementes (IE1) zu einer Anwendungs-Unterstützungseinrichtung (ASU),
c) Berechnen, welches von dem ersten und dem zweiten Hardware-Element zur Ausführung der Anwendung bevorzugt ist, durch die Anwendungs-Unterstützungseinrichtung (ASU) aufgrund vorgegebener Randbedingungen für die Berechnung,
d) Senden eines zweiten Informationselementes (IE2), das eine Angabe des bevorzugten Hardware-Elementes enthält, von der Anwendungs-Unterstützungseinrichtung (ASU) zu dem Kernnetzwerk (NW),
e) Senden eines dritten Informationselementes (IE3), das auf dem zweiten Informationselement (IE2) von der Anwendungs-Unterstützungseinrichtung (ASU) basiert, von dem Kernnetzwerk (NW) zu dem Kommunikationsendgerät (KE) und
f) Starten der Anwendung auf dem Kommunikationsendgerät (KE), basierend auf dem von dem Kernnetzwerk (NW) erhaltenen dritten Informationselement (IE3).

2. Verfahren nach Anspruch 1,
bei dem
das erste und das zweite Hardware-Element aus der Gruppe ausgewählt werden, die externe Schnittstellen (X, Y, Z), Speicher und Prozessoren (U, V, W) des Kommunikationsendgerätes (KE) enthält.

3. Verfahren nach einem der Ansprüche 1 oder 2,
bei dem
in Schritt a) das erste Informationselement (IE1) zusätzlich Angaben über weitere Hardware-Elemente des Kommunikationsendgerätes (KE) enthält.

4. Verfahren nach einem der Ansprüche 1 bis 3,
bei dem
das von der Anwendungs-Unterstützungseinrichtung (ASU) kommende zweite Informationselement (IE2) von dem Kernnetzwerk (NW) überprüft wird, ob Angaben in dem Informationselement (IE2) zu einer Umgebung des Kernnetzwerks (NW) passen, und das Kernnetzwerk (NW) bei Bedarf Angaben in dem zweiten Informationselement (IE2) von der Anwendungs-Unterstützungseinrichtung (ASU) ändert, wenn in Schritt e) das dritte Informationselement (IE3) für das Kommunikationsendgerät (KE) erzeugt wird.

5. Verfahren nach einem der Ansprüche 1 bis 4,
bei dem
das von der Anwendungs-Unterstützungseinrichtung (ASU) kommende zweite Informationselement (IE2) eine Prioritätsliste für das erste und das zweite Hardware-Element enthält.

6. Verfahren nach einem der Ansprüche 1 bis 5,
bei dem
die vorgegebenen Randbedingungen für die Anwendungs-Unterstützungseinrichtung (ASU) von einem Benutzer des Kommunikationsendgerätes (KE) festgelegt werden.

7. Verfahren nach Anspruch 6,
bei dem
die Randbedingungen für das erste und das zweite Hardware-Element spezifisch sind.

8. Verfahren nach Anspruch 7,
bei dem
das erste und das zweite Hardware-Element jeweils externe Schnittstellen (X, Y, Z) des Kommunikationsendgerätes (KE) sind und die Randbedingungen sich auf Entgelte für eine Nutzung der Schnittstellen (X, Y, Z) beziehen.

9. Verfahren nach einem der Ansprüche 1 bis 8,
bei dem
in Schritt f) vor einem Starten der Anwendung das dritte Informationselement (IE3) einem Benutzer des Kommunikationsendgerätes (KE) zur Prüfung angezeigt und entweder bestätigt oder modifiziert wird.

10. Verfahren nach Anspruch 9,
bei dem
bei Bestätigung des dritten Informationselementes (IE3) durch den Benutzer des Kommunikationsendgerätes (KE) von dem Kommunikationsendgerät (KE) aus eine Bestätigungsmeldung an die Anwendungs-Unterstützungseinrichtung (ASU) gesendet und daraufhin von der Anwendungs-Unterstützungseinrichtung (ASU) ein Code an das Kommunikationsendgerät (KE) gesendet wird, der zum Konfigurieren des Kommunikationsendgerätes (KE) entsprechend dem Inhalt des zweiten Informationselementes (IE2) ausgeführt ist.

11. Netzwerk-Anordnung zur Auswahl von Hardware zum Betrieb einer Anwendung auf einem Kommunikationsendgerät (KE), wobei ein Betrieb der Anwendung die Nutzung wenigstens eines ersten Hardware-Elementes des Kommunikationsendgerätes (KE) erfordert und das Kommunikationsendgerät (KE) wenigstens ein zweites, zu dem ersten Hardware-Element funktionell alternatives Hardware-Element aufweist, die Netzwerk-Anordnung außerdem ein Kernnetzwerk (NW) aufweist, an dem das Kommunikationsendgerät (KE) angemeldet ist,
**dadurch gekennzeichnet, dass**
die Netzwerk-Anordnung eine Anwendungs-Unterstützungseinrichtung (ASU) aufweist, die zum Empfangen eines ersten Informationselementes (IE1), das Angaben über eine zu startende Anwendung auf dem Kommunikationsendgerät (KE) und über ein erstes Hardware-Element, das zum Betrieb der Anwendung erforderlich ist, und ein zweites, zu dem ersten Hardware-Element funktionell alternatives Hardware-Element enthält, ausgebildet ist,
die Anwendungs-Unterstützungseinrichtung (ASU) eine Berechnungseinrichtung aufweist, die aufgrund des ersten Informationselementes (IE1) berechnet, welches von dem ersten und dem zweiten Hardware-Element zur Ausführung der Anwendung bevorzugt ist, und
die Anwendungs-Unterstützungseinrichtung (ASU) zum Erzeugen eines zweiten Informationselementes (IE2) ausgebildet ist, das eine Angabe des bevorzugten Hardware-Elementes enthält.

12. Netzwerk-Anordnung nach Anspruch 11,
**dadurch gekennzeichnet, dass**
die Anwendungs-Unterstützungseinrichtung (ASU) in das Kernnetzwerk (NW) integriert ist.

13. Netzwerk-Anordnung nach Anspruch 11,
**dadurch gekennzeichnet ,dass**
die Anwendungs-Unterstützungseinrichtung (ASU) über ein Gateway mit dem Kernnetzwerk (NW) in Verbindung steht.
